# EUROPEAN PATENT APPLICATION

(11) **EP 4 782 228 A1**
(43) Date of publication of application: **29.07.2026**
(21) Application number: 26153310.3
(22) Date of filing: 21.01.2026
(51) Int. Cl.: B60D 1/06, B60D 1/60

(54) **COUPLING HEAD COVER**

(30) Priority: 22.01.2025 PL 45102025
(71) Applicant: Steelpress Spolka Z Ograniczona Odpowiedzialnoscia, 60-143 Poznan (PL)
(72) Inventor: Smoli ski, Krzysztof, Pozna (PL)
(74) Representative: Piatkowska, Elzbieta

## Description

The subject of the invention is a coupling head cover with integral plug mounting trailer connection. The invention finds particular application in securing coupling heads, especially for car trailers.

Coupling head covers made of plastic, placed on the coupling head and covering the front part of the head, are known in the prior art.

Known from German patent DE3915944A1 is a tow hitch consisting of a ball coupling, a trailer socket, and a locking device for retaining the ball in the socket. A bumper assembly attached to the trailer adjacent to the socket includes a bracket extending forward in front of the socket. An impact plate is attached to the bracket at right angles to the direction of travel. The impact plate preferably includes a U-shaped recess for inserting the ball into the socket.

Known from U.S. patent US2004238474A1 is a coupling head cover used to protect the coupling head, and in particular the moving parts contained therein, from environmental influences such as dirt, snow, icing, and mechanical shocks. The operation of the coupling head cover additionally ensures an automatic coupling process between two vehicles. A cover is provided that can be pivoted from an operating or disengaged position, in which the cover is positioned in a substantially vertical position in front of the coupling head, to a resting or engaged position above the coupling. A pivot system is provided for rotating the cover, connected to both the cover and the coupling or a frame mounted on the coupling.

The technical problem this invention solves is to provide a coupling head cover that will protect the coupling head mechanism from dirt, weather conditions, and mechanical damage, while also protecting the trailer's connection plug from damage. The coupling head cover will also protect the towing vehicle during the coupling process.

The essence of the solution is the coupling head cover, which is characterized by the fact that it has an integral attachment to the trailer connection plug.

Preferably, the integral attachment for the trailer connection plug is located on the side wall of the head cover.

Preferably, the integral attachment to the trailer connection plug is in the form of a U-shaped recess in the wall of the coupling head cover.

Preferably, the internal width of the integral attachment to the connection plug is 30 to 50 mm.

Preferably, the internal length of the integral attachment to the connecting plug is between 20 and 35 mm.

Preferably, the integral attachment to the trailer connection plug is in the form of five teeth extending approximately perpendicular to the head cover wall, arranged alternately.

Preferably, the integral attachment to the trailer connection plug is in the form of two longitudinal ribs arranged alternately and parallel to each other on the head cover wall approximately perpendicular to the head cover wall.

Preferably the coupling head is made of plastic.

Preferably, the coupling head cover is made of elastomer.

Among the beneficial effects of the invention are that the coupling head cover protects the coupling head mechanism from dirt, protects the coupling head from weather conditions, and provides a means of securing and protecting the trailer's connection plug when parked, preventing damage from entanglement or collisions with adjacent vehicles, as well as from ground friction. The coupling head cover also protects the towing vehicle during the coupling process.

Additionally, the head cover is made of lightweight and durable materials, which ensures quick and cheap production as well as high resistance of the cover.

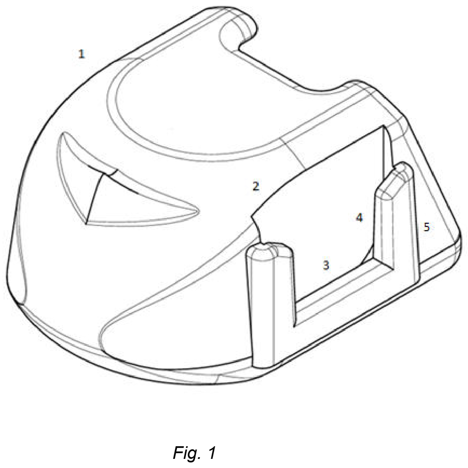

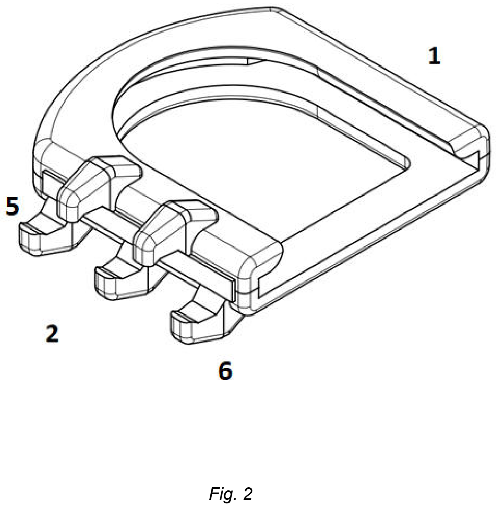

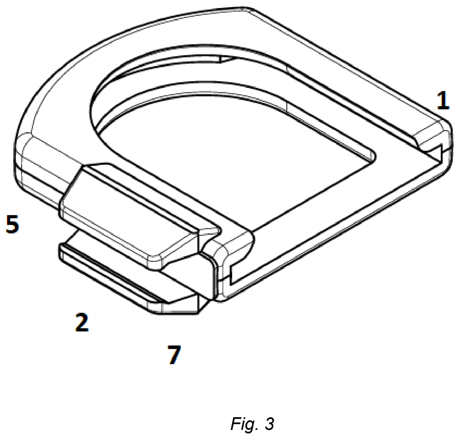

The subject of the invention is shown in an example embodiment in the drawing, where Fig. 1 schematically shows a coupling head cover with a U-shaped handle on the side wall in a perspective view, Fig. 2 schematically shows a coupling head cover with a handle in the form of five alternately arranged teeth on the side wall in a perspective view, and Fig. 3 schematically shows a coupling head cover with a handle in the form of two longitudinal ribs on the side wall in a perspective view.

In a first embodiment, the subject coupling head cover 1 has an integral mounting for a trailer connecting plug 2. The coupling head cover 1 is made of plastic. The integral mounting for the trailer connecting plug 2 is located on the side wall 5 of the coupling head cover 1 and has a U-shape. The internal width 3 of the integral mounting for the connecting plug 2 is 46 mm, and the internal length 4 of the integral mounting for the connecting plug 2 is 30 mm.

In the second embodiment, the subject coupling head cover 1 has an integral attachment for the trailer connecting plug 2. The coupling head cover 1 is made of an elastomer. The integral attachment for the trailer connecting plug 2 is located on the side wall 5 of the coupling head cover 2 and is in the form of five teeth 6 protruding approximately perpendicularly to the side wall 5 of the coupling head cover 1, arranged alternately .

In a third embodiment, the subject coupling head cover 1 has an integral attachment for the trailer connection plug 2. The coupling head cover 1 is made of an elastomer. The integral attachment for the trailer connection plug 2 is located on the side wall 5 of the coupling head cover 1 and is in the form of two longitudinal ribs 7 arranged alternately and parallel to each other on the side wall 5 of the coupling head cover 1 approximately perpendicular to the side wall 5 of the coupling head cover 1.

### List of markings

- 1 -: coupling head cover
- 2 -: trailer connection plug mount
- 3 -: Internal width of the integral trailer connection plug mount
- 4 -: Internal length of integral trailer connection plug mount
- 5 -: side wall
- 6 -: five-toothed handle
- 7 -: handle in the form of two ribs

## Claims

1. A coupling head cover (1), **characterized in that** it has an integral attachment to the trailer connection plug (2).

2. A coupling head cover (1) according to claim 1, **characterized in that** the integral attachment for the trailer connection plug (2) is provided on a side wall (5) of the coupling head cover (1).

3. A coupling head cover (1) according to any one of claims 1-2, **characterized in that** the integral attachment to the trailer connection plug (2) is in the form of a U-shaped recess in the side wall (5) of the coupling head cover (1).

4. Coupling head cover according to any one of claims 1 - 3, **characterized in that** the internal width (3) of the integral mounting for the connecting plug (2) is 30 to 50 mm.

5. Coupling head cover according to any one of claims 1 - 4, **characterized in that** the internal length (4) of the integral attachment to the connecting plug (2) is from 20 to 35 mm.

6. A coupling head cover according to any one of claims 1-2, **characterized in that** the integral attachment to the trailer connection plug (2) is in the form of five teeth (6) protruding approximately perpendicularly to the side wall (5) of the coupling head cover (1), arranged alternately.

7. A coupling head cover according to any one of claims 1-2, **characterized in that** the integral attachment to the trailer connection plug (2) is in the form of two longitudinal ribs (7) arranged alternately and parallel to each other on the side wall (5) of the coupling head cover approximately perpendicular to the wall (5) of the coupling head cover.

8. Coupling head cover according to any one of claims 1-7, **characterized in that** it is made of plastic.

9. Coupling head cover according to any one of claims 1 - 8, **characterized in that** it is made of an elastomer.
